# EUROPEAN PATENT APPLICATION

(11) **EP 1 437 204 A1**
(43) Date of publication of application: **14.07.2004**
(21) Application number: 04000228.9
(22) Date of filing: 08.01.2004
(51) Int. Cl.: B27D 3/00, B27D 1/08

(54) **Vacuum veneering machine, particularly for components of doors or windows, such as door wings, jambs or the like**

(30) Priority: 09.01.2003 IT PD20030002
(71) Applicant: Progetto Abitare di Segato Gianfranco, 35010 Curtarolo (Prov. of Padova) (IT)
(72) Inventor: Segato, Gianfranco, 35016 Vaccarino di Piazzola sul Brenta (IT)
(74) Representative: Modiano, Guido, Dr.-Ing.

(57) **Abstract**

A vacuum veneering machine (10), particularly for components of doors or windows, such as door wings, jambs or the like, comprising a supporting framework (11) for a table (12) for supporting a product (13) to be veneered; a membrane (15) can be superimposed on the table (12); the table, together with the superimposed membrane, forms an airtight environment inside which the product to be veneered is contained; the table is further associated with means for creating substantially a vacuum inside the environment; the membrane (15) adheres to the surface of the product (13) during the operation of the means; the table (12) has at least one step-like portion (16).

## Description

The present invention relates to a vacuum veneering machine, particularly for components of doors or windows, such as door wings, jambs or the like.

The invention relates in particular to wings for doors made of wood or the like, which have continuous rounded surfaces and undercut obtuse angles.

Currently, known vacuum veneering machines can all be traced back to a single type that comprises a supporting framework for a table that is fully horizontal, without height variations, on which the products to be veneered are arranged, and an exclusively flat frame that is articulated to said framework, lies above the table and supports a membrane.

An airtight environment is produced between the frame with the membrane and the table.

The product to be veneered is covered beforehand with adhesive on the surface to be veneered, and a thin sheet of material having aesthetic finish qualities, such as for example a thin veneer of wood, is then placed on said surface.

The product thus finished is arranged so that its surface covered by the sheet is directed substantially upward.

Air is drawn from the airtight environment by means of a vacuum pump.

The resulting partial vacuum causes the membrane, forced by the difference between the outside atmosphere and the internal pressure, to separate from the frame and adhere to the upper surface of the product.

At this point, operation is interrupted, the frame is raised, the product is turned so that the next surface to be veneered faces upward, and the process is repeated.

As it is evident, this type of machine allows to veneer substantially one surface at a time or surfaces that are scarcely inclined with respect to each other.

Further, it does not allow veneering on undercuts or surfaces of the product that are in a shadow zone with respect to the membrane.

In order to veneer comer surfaces, for example, it is necessary to use supports by way of which the vertex of the comer is directed toward the membrane.

This leads to the need to have large volumes of space between the frame and the table in the case of large products to be veneered and to the need to provide specific supporting fixtures.

Machines that are similar to the one described above are also known which have the particularity of using two parallel membranes between which the product to be veneered is arranged.

In this manner, the surfaces on which it is possible to veneer are doubled, but it is still necessary to perform additional veneering for undercut or shadow-zone surfaces.

The aim of the present invention is to provide a vacuum veneering machine, particularly for components of doors or windows, such as door wings, jambs or the like, that solves the problems described in known types of veneering machine.

Within this aim, an object of the present invention is to provide a vacuum veneering machine, particularly for components of doors or windows, such as door wings, jambs or the like, that allows to veneer undercut surfaces.

Another object of the present invention is to provide a vacuum veneering machine, particularly for components of doors or windows, such as door wings, jambs or the like, that allows to increase productivity.

Another object of the present invention is to provide a vacuum veneering machine, particularly for components of doors or windows, such as door wings, jambs or the like, that allows to handle large products and products having non-standard dimensions.

Another object of the present invention is to provide a vacuum veneering machine, particularly for components of doors or windows, such as door wings, jambs or the like, that allows to handle products that have long angled or rounded surfaces with large radii of curvature.

Another object of the present invention is to provide a vacuum veneering machine, particularly for components of doors or windows, such as door wings, jambs or the like, that can be manufactured with known systems and technologies.

This aim and these and other objects that will become better apparent hereinafter are achieved by a vacuum veneering machine, particularly for components of doors or windows, such as door wings, jambs or the like, comprising a supporting framework for a table for supporting a product to be veneered, a membrane being superimposable on said table, said table with said superimposed membrane forming an airtight environment inside which the product to be veneered is contained, said table being further associated with means for creating substantially a vacuum inside said environment, said membrane adhering to the surface of said product during the operation of said means, said machine being characterized in that said table has at least one step-like portion.

Further characteristics and advantages of the invention will become better apparent from the description of a preferred but not exclusive embodiment of the invention, illustrated by way of non-limiting example in the accompanying drawings, wherein:
Figure 1 is a perspective view of the machine during opening, according to the invention;
Figure 2 is a schematic transverse sectional view of the machine according to a first embodiment of the invention, illustrating the arrangement of the table, of the frame and of the membrane during operation;
Figure 3 is a schematic transverse sectional view of the machine according to a second embodiment of the invention, illustrating the arrangement of the table, of the frame and of the membrane during operation;
Figure 4 is a front perspective view of a variation of the machine shown in the preceding figures during opening, according to the invention;
Figure 5 is a rear axonometric view of the machine of Figure 4;
Figure 6 is a schematic transverse sectional view of the machine of Figure 4, according to a first embodiment of the invention, illustrating the arrangement of the table, of the frame and of the membrane during operation;
Figure 7 is a schematic transverse sectional view of the machine of Figure 4 according to a second embodiment of the invention, illustrating the arrangement of the table, of the frame and of the membrane during operation;
Figure 8 is a front perspective view of a further embodiment of the structures shown in the preceding figures during opening, according to the invention;
Figure 9 is a schematic transverse view of the machine of Figure 8 according to an embodiment the invention, illustrating the arrangement of the table, of the frame and of the membrane during operation.

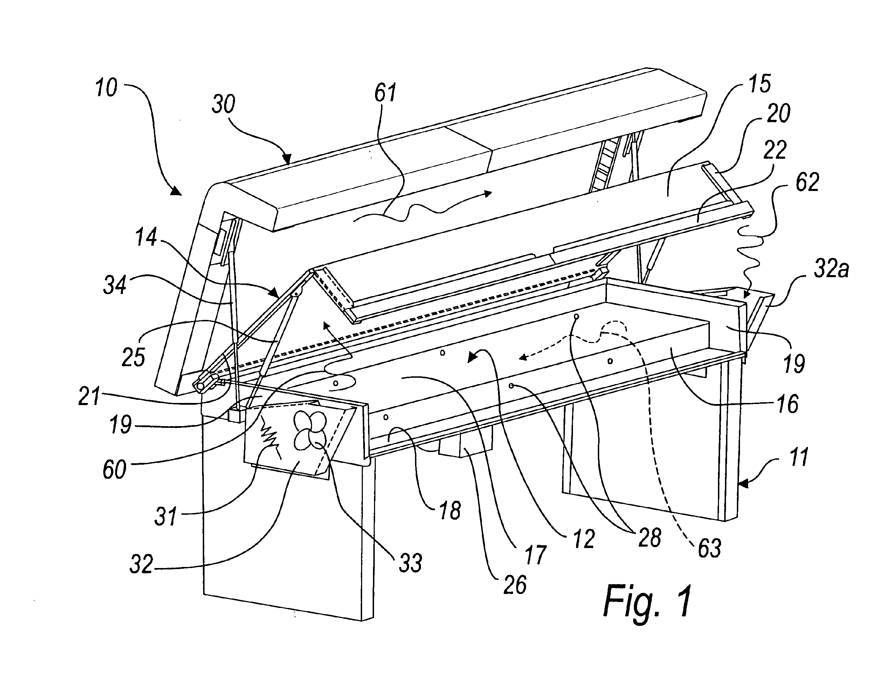

With reference to Figures 1 to 3, a vacuum veneering machine according to the invention is generally designated by the reference numeral 10.

The machine 10 comprises a supporting framework 11 for a table 12 for supporting a product 13 to be veneered.

A supporting frame 14 for a membrane 15, constituted by a sheet of silicone material in this embodiment, can be superimposed on the table 12.

The table 12 has a substantially rectangular perimeter and has a step-like portion 16 for connection between a first flat surface 17 and a second flat surface 18, which is located in a lower position and is shorter than the first surface 17.

Laterally, on the short sides of the perimeter of the table 12, there are two raised lateral containment edges 19.

The supporting frame 14 substantially has the same perimetric dimensions as the table 12 and indeed substantially duplicates its extension.

The frame 14 in fact has a portion 20 that is perpendicular to its own extension and is designed to be superimposed on the step-like portion 16 of the table 12.

In practice, said frame is substantially L-shaped in a transverse cross-section.

The frame 14 is formed exclusively by means of cross-members 21 and longitudinal members 22 that support the peripheral region of the membrane 15.

The membrane 15 can undergo deformation under the action of a preset force, such as for example the force generated by a partial vacuum, adhering to the product to be veneered, as explained hereinafter.

The frame 14 is articulated, by the ends of the long cross-members 21, to the framework 11 proximate to the most peripheral region of the table 12, and can be superimposed on the table 12, forming, together with the membrane 15, an airtight environment 24 inside which the product 13 to be veneered is contained.

In practice, the frame 14 closes in a book-like fashion onto the table 12, abutting against the second surface 18 and against the two raised lateral containment edges 19.

Sealing elements of a per se known type are provided (and not shown in the figures) on said abutment surfaces.

In order to keep the frame 14 in a raised position during machine preparation, there are first pneumatic arms 25 with a gas-assisted strut which are articulated between the cross-members 21 and the framework 11.

Means for substantially producing vacuum inside the environment 24 are provided below the table 12, and in this embodiment are constituted by a vacuum pump 26 that is functionally connected to the environment 24 by way of ducts 27 provided with intakes 28 on the table 12.

The machine 10 further comprises a thermally insulated housing 30 that can be closed in a book-like fashion onto the table 12.

The housing 30 is substantially L-shaped in transverse cross-section, duplicates the configuration of the frame 14, and is articulated proximate to the same articulation position as the frame 14.

When the housing 30 is closed onto the platform 12, the frame 14 and the membrane 15 are included between the housing and the table 12, the frame and the membrane being already superimposed on the table 12.

Heating means are further provided on the machine in association with the housing 30.

In this embodiment, the heating means are constituted by electric resistors 31 that are arranged inside a receptacle 32 located on one of the two edges 19.

The electric resistors 31 are designed to heat the air.

Ventilation means are provided in association with the heating means and are constituted by a fan 33 that is functionally connected, by way of a ventilation circuit, to the inside of the housing 30 when the housing is closed onto the table 12.

The fan 33 also is arranged inside the receptacle 32.

The ventilation circuit is formed by the receptacle 32 (which also acts as a conveyance element in input to the housing 30), by a first duct (not shown in the figure) inside the housing 30, by a conveyance element 32a in output from the housing and in input to a second duct (not shown in the figure) that is arranged below the table 12 and leads to the receptacle 32.

In Figure 1, the motion of the air is shown by means of arrows: the reference numeral 60 designates the air that enters the housing 30, the reference numeral 61 designates the path of the air inside the housing, the reference numeral 62 designates the air in output from the housing, and the reference numeral 63 designates the air that circulates in the second duct toward the fan 33.

In order to keep the housing 30 in the raised position during machine preparation steps, there are second pneumatic arms 34 with gas-assisted strut that are articulated between the edges of said housing and the framework 11.

In order to position in an optimum manner the product 13 to be veneered, the machine 10 comprises elements for adjusting the height of said product with respect to the table 12 and the frame 14.

The adjustment elements are constituted by shims 35 that are arranged in a predefined manner on the surface of the table 12.

In particular, in this embodiment, shims 35 are arranged on the first surface 17 of the table 12 and on the second surface 18 of the table 12, proximate to the step-like portion 16.

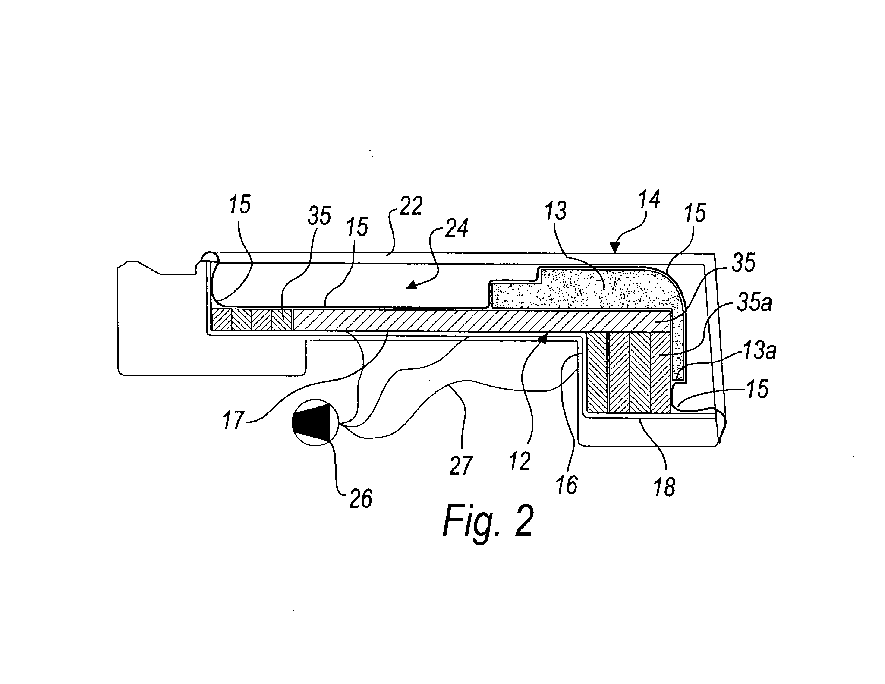

With reference to Figure 2, the product 13 has an L-shaped configuration, the contour of which rests against the shims 35a that cover the step-like portion 16 of the table 12.

With this arrangement, the part 13 has an undercut 13a.

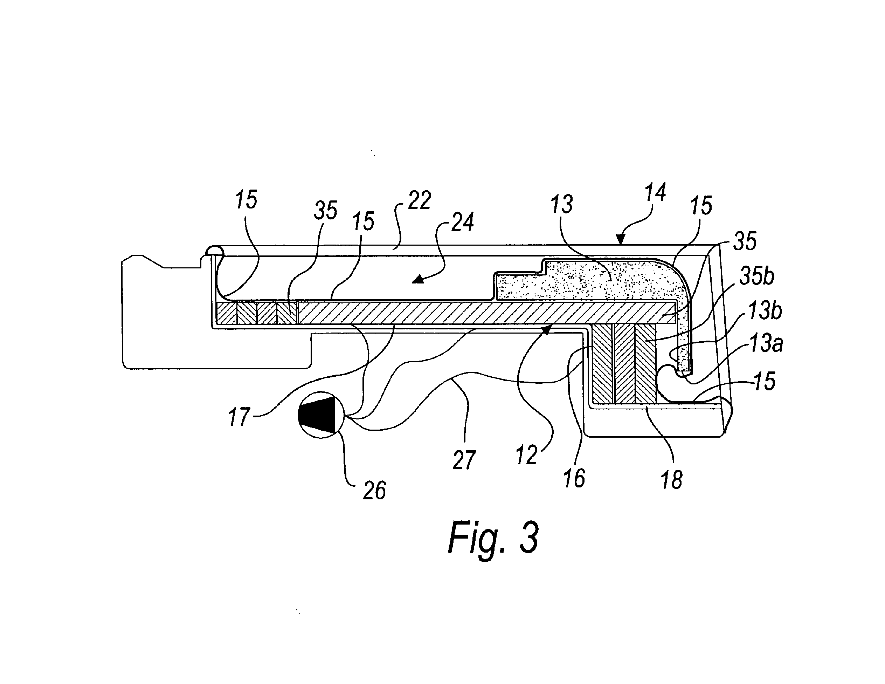

With reference to Figure 3, the product 13 has the same L-shaped configuration of Figure 2 but does not rest against the shims 35b that cover the step-like portion 16 of the table 12.

The product 13 again has the same undercut 13a, but in addition, by way of this configuration, a space 36 has been formed between the shims 35b and the product 13, allowing the membrane 15 to adhere partially in the region 13b of the product that is in a shadow zone with respect to said membrane.

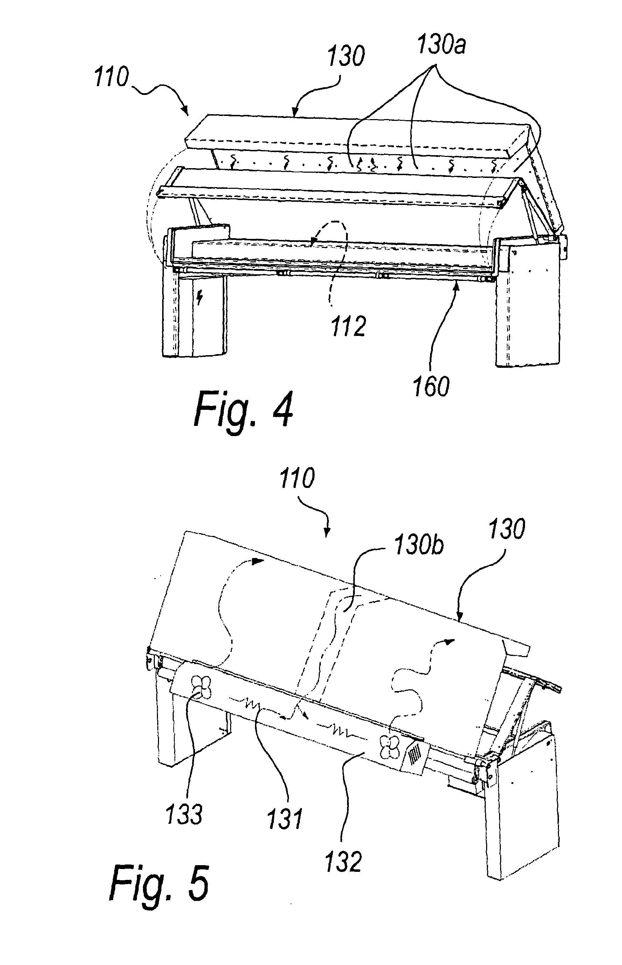

An alternative version of the machine, designated by the reference numeral 110 and shown in Figures 4, 5, 6 and 7, is provided with heating means (electric resistors 131) that are arranged inside a receptacle 132 that is located behind the housing 130 and inside which fans 133 are arranged.

The interior of the receptacle 132 and the interior of the housing 130 form a ventilation circuit.

Warm air flows from the receptacle 132 into the housing 130 and from there, through holes 130a, into the space formed between the housing 130 and the table 112.

In particular, the air exits through holes 130a that are arranged laterally with respect to the extension of the housing 130 and returns into the housing through holes arranged in a central region 130b with respect to the extension of the housing 130, accordingly closing the circuit.

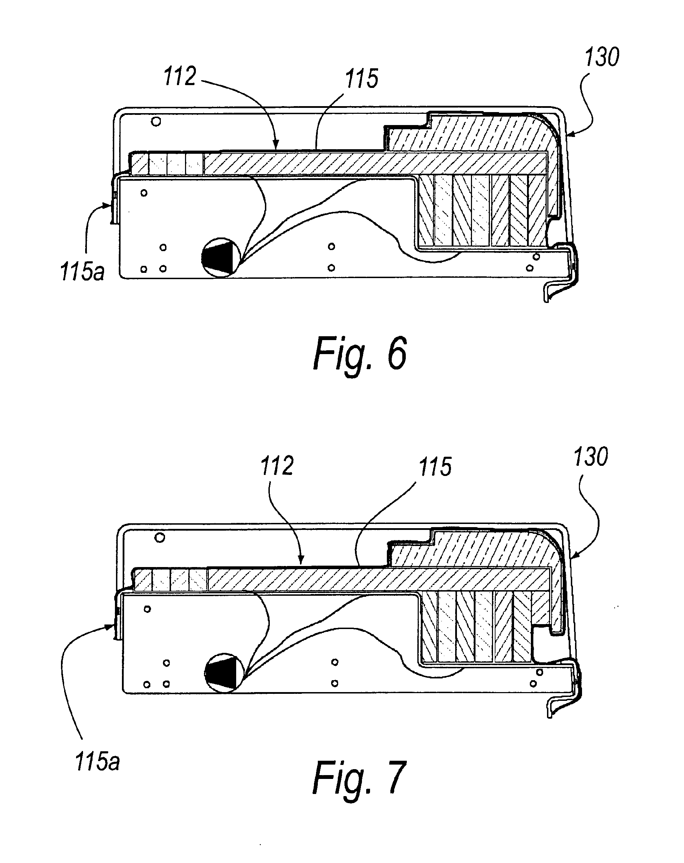

Figures 6 and 7, which are respectively similar to Figures 2 and 3, illustrate two alternative methods of arranging the membrane 115.

One edge end 115a of the membrane 115 is arranged to the rear of the table 112, while the opposite end is associated with a longitudinal member 122 of the frame 114, which is locked by way of locking/release means 160 described in detail hereinafter.

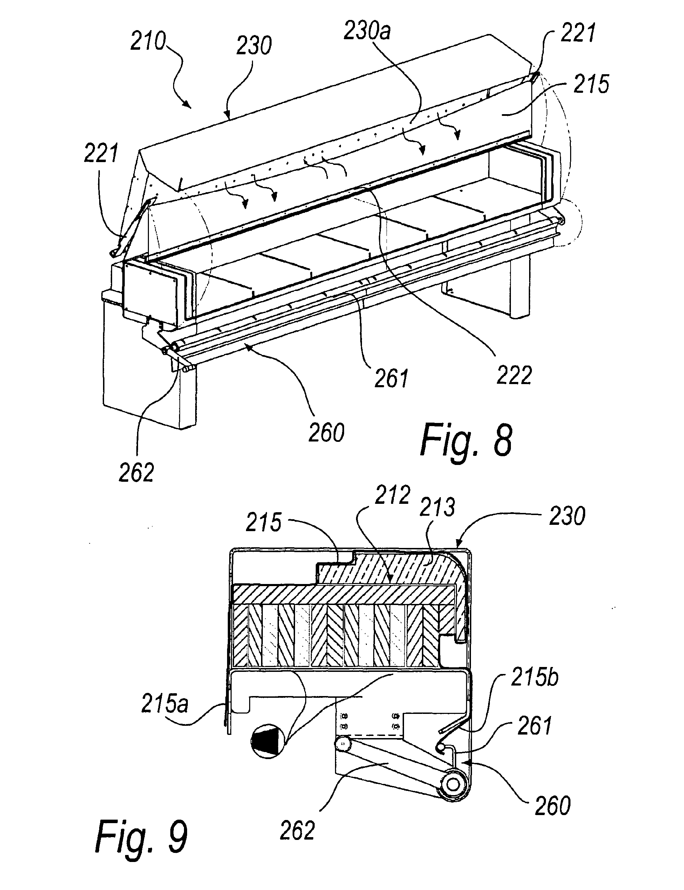

Another embodiment of the machine, designated by the reference numeral 210 and substantially derived from the embodiment 110, is shown in Figures 8 and 9.

In this embodiment, the supporting frame of the membrane 215 is not provided.

The edge end 215a of the membrane 215 can be fixed to the rear of the table 212, while the opposite end 215b is fixed to a longitudinal member 222 that is not supported by any element.

The membrane 215 can be supported laterally by lateral arms 221 that can be raised with respect to the table 212, since they are pivoted, by one of their ends, to the framework 211 of the machine 210.

The arms 221 allow to lift and lower the membrane 215 onto the table 212, so as to be superimposed on the product 213 to be veneered.

Said machine is provided with means 260 for locking/releasing the membrane 215 with respect to the table 212.

The locking/release means 260 are similar to the means mentioned earlier as regards the variation of the machine designated by the reference numeral 110.

The locking/release means 260 comprise a longitudinally elongated hook 261 that can rotate for association with a pivot that is arranged below the table 212.

The hook 261 couples to the free end 215b of the membrane 215, tensioning it and ensuring watertightness.

The hook 261 is associated with an actuation crank 262 that allows to lock and release the membrane.

As in the embodiment of the machine 110, the ventilation circuit comprises holes 230a on the housing 230 and a receptacle (not shown in the figures) for the resistors and the fans that is arranged to the rear of the table.

With reference to the first embodiment, the operation of the invention is as follows (the operation of the other variations is substantially similar).

The housing 30 and the frame 14 with the corresponding membrane 15 are raised and the shims 35 are arranged in a preset manner according to the type of product to be veneered.

The product to be veneered is coated beforehand with adhesive on the surface to be veneered, and a thin sheet of material having aesthetic finish qualities, such as for example a thin veneer of wood, is applied to such surface.

The product thus finished is arranged so that the surface that is covered by the sheet is directed substantially upward or in any case toward the membrane 15 when the frame 14 is closed.

Once the product 13 has been positioned, the frame 14 is lowered together with the corresponding membrane 15 and is substantially superimposed on the table 12, forming the airtight environment 24.

The housing 20 is then lowered.

At this point, the pump 26 is operated and the air is aspirated from the environment 24.

The resulting partial vacuum causes the membrane 15, forced by the difference between the atmosphere outside the environment 24 and the internal pressure, to undergo a deformation, adhering to the surface of the product 13 on all of its accessible parts, both the undercut 13a of Figures 2 and 3 and part of the shadow zone 13b shown in Figure 3.

Atmospheric pressure continues to act as long as the pump 26 is kept running; the force that it applies to the membrane is sufficient to allow optimum bonding of the thin sheet to the product 13.

The heating means act simultaneously with the action of the vacuum pump 26.

The electric resistors 31 reach the suitable temperature conditions when the operation of the pump 26 begins; at that moment, the fan 33 is started, moving the air heated by the resistors through the ventilation circuit, accordingly leading to a general heating of the environment 24 and accordingly accelerating the adhesive drying step.

After a preset time, the operation of the pump, of the heating means and of the ventilation means is interrupted.

A time suitable for cooling is allowed to elapse, and finally the housing is opened in order to extract the product thus veneered.

In practice it has been found that the invention thus described solves the problems noted in known types of vacuum veneering machine; in particular, the present invention provides a vacuum veneering machine, particularly for components of doors or windows, such as door wings, jambs or the like, that allows to veneer undercut surfaces.

Further, the present invention provides a vacuum veneering machine, particularly for components of doors or windows, such as door wings, jambs or the like, that allows to increase productivity since the products to be veneered require less additional work.

Further, the present invention provides a vacuum veneering machine, particularly for components of doors or windows, such as door wings, jambs or the like, that allows to handle large products and products having non-standard dimensions.

Moreover, the present invention provides a vacuum veneering machine, particularly for components of doors or windows, such as door wings, jambs or the like, that allows to handle products that have long angled or rounded surfaces with large radii of curvature.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

The disclosures in Italian Patent Application No. PD2003A000002, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A vacuum veneering machine, particularly for components of doors or windows, such as door wings, jambs or the like, comprising a supporting framework for a table for supporting a product to be veneered, a membrane being superimposable on said table, said table with said superimposed membrane forming an airtight environment inside which said product to be veneered is contained, said table being further associated with means for creating substantially a vacuum inside said environment, said membrane adhering to the surface of said product during the operation of said means, said machine being **characterized in that** said table has at least one step-like portion.

2. The machine according to claim 1, **characterized in that** it comprises a supporting frame for said membrane, said frame together with said membrane being superimposed on said table so as to form said airtight environment inside which said product to be veneered is contained, said supporting frame having at least one portion that is perpendicular to its own extension so that it overlaps said at least one step-like portion of said table.

3. The machine according to claim 1, **characterized in that** it comprises lateral supporting arms for said membrane that can be raised with respect to said table.

4. The machine according to claim 3, **characterized in that** an end edge of said membrane is fixed with respect to said table and the opposite end is associated with a longitudinal member.

5. The machine according to one or more of the preceding claims, **characterized in that** it comprises a thermally insulated housing that can be closed onto said table, said membrane being included between said table and said housing closed onto said table, heating means being further provided on the machine in association with said housing.

6. The machine according to claim 5, **characterized in that** it comprises ventilation means in association with said heating means.

7. The machine according to claim 6, **characterized in that** said ventilation means comprise a fan that is functionally connected to the inside of said housing when said housing is closed onto said table.

8. The machine according to one or more of the preceding claims, **characterized in that** said heating means comprise electric resistors.

9. The machine according to one or more of the preceding claims, **characterized in that** it comprises elements for adjusting the height of said product to be veneered with respect to said table and said frame.

10. The machine according to claim 9, **characterized in that** said elements for adjusting the height of said product to be veneered with respect to said table and said frame comprise shims that are arranged in a predefined manner on the surface of said table.

11. The machine according to one or more of the preceding claims, **characterized in that** said means for substantially producing a vacuum inside said environment comprise a vacuum pump that is functionally connected to said environment.

12. The machine according to claim 11, **characterized in that** said vacuum pump is functionally connected to said environment by means of ducts that are provided with intakes on said table.

13. The machine according to one or more of the preceding claims, **characterized in that** said membrane is formed by a sheet of silicone material.

14. The machine according to one or more of the preceding claims, **characterized in that** said membrane is formed by a rubber sheet.

15. The machine according to one or more of the preceding claims, **characterized in that** said step-like portion is designed to provide connection between a first flat surface and a second flat surface of said table, said second flat surface being arranged in a lower position and being shorter than said first surface.

16. The machine according to one or more of the preceding claims,
**characterized in that** said table has a substantially rectangular perimeter, two raised lateral containment edges being provided on the short sides of the perimeter of said table.

17. The machine according to one or more of the preceding claims, **characterized in that** said frame is formed by means of cross-members and longitudinal members that support the peripheral region of said membrane.

18. The machine according to one or more of the preceding claims **characterized in that** said membrane is free to separate from said cross-members under the action of a preset force.

19. The machine according to one or more of the preceding claims, **characterized in that** said frame is articulated by the ends of the cross-members to said framework proximate to the extreme peripheral region of said table.

20. The machine according to one or more of the preceding claims, **characterized in that** said frame can be closed in a book-like fashion onto said table, abutting both against said second surface and against said raised lateral containment edges.

21. The machine according to one or more of the preceding claims, **characterized in that** sealing elements are provided on said first surface and said second surface of said table and on said raised lateral containment edges.

22. The machine according to one or more of the preceding claims, **characterized in that** it comprises a thermally insulated housing that can be closed in a book-like fashion onto said table.

23. The machine according to claim 22, **characterized in that** said housing has a substantially L-shaped transverse contour, said housing being articulated proximate to the same articulation position as said frame.

24. The machine according to one or more of the preceding claims, **characterized in that** said resistors and said fan are arranged inside a receptacle that is located on one of said lateral containment edges, said receptacle being functionally connected by way of a ventilation circuit to the inside of said housing when said housing is closed onto said table.

25. The machine according to one or more of the preceding claims, **characterized in that** it comprises means for locking/releasing said membrane with respect to said table.

26. The machine according to claim 25, **characterized in that** said means for locking/releasing said membrane with respect to said table comprise a longitudinally elongated hook that can rotate in order to be associated with a pivot that is arranged below said table, said hook being coupled to the free end of said membrane, tensioning it, said hook being further associated with an actuation crank.
